# EUROPEAN PATENT APPLICATION

(11) **EP 2 540 492 A1**
(43) Date of publication of application: **02.01.2013**
(21) Application number: 11172212.0
(22) Date of filing: 30.06.2011
(51) Int. Cl.: B32B 7/06, B65D 17/00

(54) **Peelable film**

(71) Applicant: Amcor Flexibles Transpac N.V., 1935 Zaventem (BE)
(72) Inventor: Malfait, Tony, 8880 Rollegem-Kapelle (BE); Perez Moreno, Anna, 08018 Barcelona (ES); Ourieva, Galina, 7750 Amougies (BE)
(74) Representative: pronovem

(57) **Abstract**

The present invention is related to a peelable film to be sealed on a polyester-based substrate comprising a coextruded multilayer structure comprising:
- a rupturable polyester-based sealant layer;
- an adhesive layer in contact with said rupturable layer, comprising a polymer selected from the group consisting of ionomers, maleic anhydride grafted polyolefin, EVA, EBA, EMA and EAA;
- a gas-barrier layer in contact with said adhesive layer, comprising a gas-barrier polymer selected from the group consisting of EVOH and polyamide,
characterised in that the average peel strength between the adhesive layer and the rupturable sealant layer is lower than 15N/15 mm, preferably lower than 13N/15mm as measured in a 180° peel geometry.

## Description

### Field of the Invention

The present invention relates to flexible packaging and in particular to a peelable polymer-based film to be sealed on polyester-based substrates as a lidding film or to be sealed on itself for flow pack applications. The present invention also discloses a process for the preparation of said film.

### State of the Art

The goal of peelable films in flexible packaging is to provide easy opening of a pack without physical damage of the pack caused by the use of a knife, scissors or by manual tearing and breaking by the end user. High-quality peel systems nowadays provide a smooth peeling without layer split-offs, fibre lifting, bearding, zipping or peel trace disruptions during the opening of the seam.

During the production of films and laminates, peelability is obtained by a variety of methods. In the down-stream converting operations typically, lacquers and hot-melts are applied. Examples are peelable coatings on aluminium, paper or synthetic paper substrates such as spun bonded materials (e.g. Tyvek from Dupont).

In terms of costs, peelable films are preferably manufactured by a one-step (co-)extrusion process. Conventional extrusion processes are blown, cast and extrusion coating. In these processes, polymers, polymer combinations or blends are added in one or more of the layers so that the sealable side in contact with the substrate has a controlled reduction of seal strength compared to a lock seal. This so-called peel force/peel strength allows the consumer to open the pack in a convenient and user-friendly way. In some cases, inorganic filler materials are also used instead of polymeric materials in order to obtain peelable seals. However, when the film transparency becomes a critical parameter, polymer-blend solutions are the favoured approach.

Usually, to obtain a peelable seal against polyolefins (PE or PP), polyolefinic incompatible blends are used to obtain the easy-to-peel behaviour. Blend components are selected in such a way that the major polyolefinic components form the matrix phase, selected to be compatible with the sealable substrate, and one or more minor components, partially incompatible with the matrix, create the peel behaviour. In some cases, further additional components are added for optimizing the compatibility of the matrix with the dispersed phase.

A large number of peelable applications against polyolefinic substrates are based on this principle and result in so-called cohesive failure during peeling. In other words, the splitting occurs in the weakened seam, leaving a visible peel trace on both separated films. In a perfect peel, this mechanism provides a smooth opening with a broad operational window having consistent peel forces over a considerable sealing-temperature range.

The particular choice of the different polyolefinic blend partners in terms of alpha-olefin types, co-monomer content, branching level, branching distribution, isotacticity, etc. largely depends on the requirements of the end application: packaging speeds, mechanical properties, sterilization resistance, magnitude of peel force, broadness of the peel force window, etc.

Alternative polymeric materials are also commercially available in order to seal onto polyolefins. Examples are functionalized polymers such as ionomers giving rise to the so-called burst-peel behaviour during opening. This technology is well-established for particular applications such as cereal liners or for sealing through contamination, but has the disadvantage of high resin prices combined with some inherent processing complexities compared to basic polyolefins.

For sealing and peeling against non-polyolefinic substrates, the use of functionalized polymers is difficult to avoid. Due to the non-polar nature of the polyolefins, PE and PP hardly show any adhesion to materials like rigid amorphous PET (APET) and PETG bottom webs. Therefore, blends of EVA, EMA, EBA, EAA, ionomers, grafted polymers are used as sealant layers. Examples of these are the Appeel and Bestpeel from Dupont and Arkema, respectively.

Apart from the selling prices of these polymers, a further disadvantage is their inherent stickiness and softness, particularly for the higher co-monomer content levels. Peeling of such systems against non-polyolefinic substrates is by definition therefore almost adhesive-like and occurs at the interface between the sealant layer and the surface of the substrate.

Actually, the tackiness and pressure-sensitive nature of these materials provides a non-selective sealing against almost any substrate. However, the stickiness of high co-monomer content polymers is difficult to handle in an extrusion operation. In a traditional blown-film operation, the film is hard to separate after collapsing, wrinkles appear due to sticking to the guidance rollers and during winding, the film starts to self-adhere upon pressure in master jumbo reels.

This stickiness becomes even more pronounced when the film is corona-treated during extrusion in order to be laminated further downstream. In the wound reel, the polar surface of the corona-treated lamination easily adheres with the polar surface of the peelable-seal layer. Therefore, high levels of slip combined with anti-blocking agents in the layers are required to avoid blocked reels. When the anti-blocking level is insufficient, high pressure is required during unwinding of the reels in the lamination step. The film therefore risks becoming permanently stretched or deformed, which results in tunnels in the laminate. Combined with a poor operational performance, low speeds and high-scrap level, the presence of anti-block systems deteriorates the optics of the end laminate.

In bulk fresh-food markets, as for instance for the packaging of cheese and meat, the packaging end quality is a key factor. In those products, barrier, peel behaviour and optical performance should be combined to the highest level. Driven by strong price pressure in this market area, the end packer tends to move away from traditional thermoformed rigid PE/APET bottom web with a sealant PE-based lid and with the peelable system in either the bottom or the top, to a pure high-clarity APET system with a peelable lid against APET. For the technical reasons described above, the adhesive systems based on functionalized polymers do not provide an economical and technical valuable solution to follow this market trend.

Another example is in the medical device market, where current peelable lidding films based on crystal-clear PETG trays have their transparency reduced by the use of high anti-block formulated EVA peelable materials, combined with the potential risk of having the packaged product stick on the lidding film after the pack is opened.

The document EP 1 312 470 A discloses a peelable lidding film to be sealed on PET-based substrates without functional polymers causing blocking risk. This tamper-evident film is however not transparent.

The document EP 1 685 954 discloses another peelable lidding film to be sealed on PET substrates using a tackified pressure-sensitive adhesive layer providing resealability. Further to the fact that the disclosed packaging is reasealable, which may be undesirable in some particular applications, the use of tackifying resins also presents some drawbacks, such as the risk of migration of low molecular weight species through the thin breakable sealant layer. Such low molecular weight species may for example change the organoleptic properties of the content of the package or present toxicological issues.

Even cohesive peelable solutions based on a PETG matrix with dispersed PE and/or functionalized PE polymers such as EVA, EMA, EBA, EAA, ionomers, grafted polymers have been proposed in the market, but these blends suffer from an insufficient balance in compatibility between the two phases. As a result, long extrusion runs end-up with significant material exudation and die-deposits requiring frequent die-lips or die-head cleaning, and hence a non-economical operation.

### Aims of the Invention

The present invention aims to provide a multilayer peelable film to be sealed on polyester-based substrates or on itself in the case of flow pack applications and a process for the preparation of said film.

### Summary of the Invention

The present invention is related to a peelable film to be sealed on a polyester-based substrate comprising a coextruded multilayer structure comprising:
- a rupturable polyester-based sealant layer;
- an adhesive layer in contact with said rupturable layer, comprising a polymer selected from the group consisting of ionomers, maleic anhydride grafted polyolefin, EVA, EBA, EMA and EAA;
- a gas-barrier layer in contact with said adhesive layer, comprising a gas-barrier polymer selected from the group consisting of EVOH and polyamide;
   characterised in that the average peel strength between the adhesive layer and the rupturable sealant layer is lower than 15N/15 mm, preferably lower than 13N/15mm as measured in a 180° peel geometry.

According to particular preferred embodiments, the present invention comprises one or a suitable combination of more than one of the following features:
- the first break strength between the adhesive layer and the rupturable sealant layer is lower than 18N/15 mm, preferably lower than 16N/15mm as measured in a 180° peel geometry;
- the ratio between the first break strength and the average peel strength is between 1.6 and 1.1;
- the thickness of the polyester-based sealant layer is lower than 10µm and preferably lower than 5µm;
- the polyester-based sealant layer comprises a polyester selected from the group consisting of PET, PETG and APET;
- the adhesive layer is a maleic anhydride grafted polyolefin;
- the barrier layer comprises EVOH;
- the barrier layer has an oxygen transmission measured at 23°C and 50 % lower than 1000 cc/m2.atm.day, preferably lower than 500 cc/m2.atm.day measured according to DIN 53380;
- the adhesive layer comprises a polymer selected from the group consisting of EVA, EBA, EMA and EAA;
- the peelable film according to the invention further comprises a tie layer adjacent to the barrier layer.

Another aspect of the invention is related to a packaging comprising a peelable film or a laminate comprising the peelable film according to the invention.

The present invention additionally discloses a process for the preparation of the peelable film according to the invention comprising the steps of:
- extruding a polyolefin liner with the peelable film on each side in a symmetric configuration;
- separating the peelable film from the polyolefin liner;
- optionally an additional lamination step of the peelable film to a substrate.

### Brief Description of the Drawings

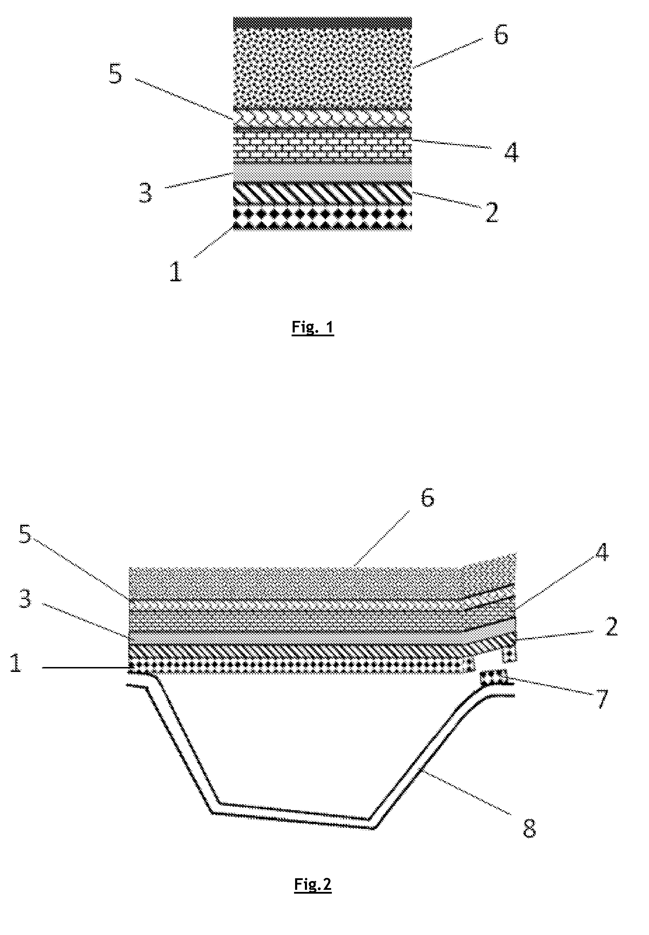

Fig. 1 represents an example of a peelable film according to the invention.

Fig. 2 represents the opening process of a peelable film according to the invention in a configuration as lidding film.

Fig. 3 represents a typical peel test diagram of the seal of a peelable film according to the invention.

### Figure keys

1. Rupturable layer
2. Adhesive layer
3. Barrier layer
4. Bonding layer
5. Lamination adhesive layer
6. Laminated layer
7. Seal seam after peeling
8. Polyester tray
9. Peak peel strength (breaking strength)
10. Average peel strength

### Detailed Description of the Invention

The present invention relates to a peelable film to be sealed onto polyester-based surfaces such as sealant surfaces of PETG or APET thermoformed trays or on itself in the particular case of flow pack applications.

To achieve this aim, a very thin layer of polyester 1, such as PETG or APET, is coextruded along with an adhesive layer 2 on a barrier layer 3.

The barrier layer 3 is preferably selected from the group consisting of polyamide, EVOH, specific polyester types and their blends. Preferably, the barrier layer 3 comprises polyamide and/or EVOH.

The adhesive layer 2 used in the present invention is of the type usually used as coextrusion tie layers. These are preferably selected from the group consisting of ionomers, maleic anhydride grafted polyolefins, ethylene vinyl acetate copolymers, ethylene vinyl acrylate copolymers such as EMA, EBA and EAA.

When used as tie layers, the level of grafting of the copolymer composition is selected in order to ensure a permanent adhesion of the tie layer on the adjacent layers. On the contrary, in the present invention, this adhesion (delamination strength) will be reduced in order to obtain an acceptable peel strength.

This reduction may be obtained by using tie-resin grade usually considered as not suitable to adhere on a given adjacent layer, by diluting the adhesive resin with a polymer that is compatible with the adhesive resin, but having poor adhesion to the adjacent layer (for example LLDPE diluting EVA or maleic anhydride grafted PE).

The peel strength may also be reduced by using extrusion parameters that are different from those suggested by the adhesive resin supplier. For example, reducing the extrusion temperature may result in an adhesion reduction, giving the desired peelability. Reducing the tie-layer thickness may also reduce the adhesion strength.

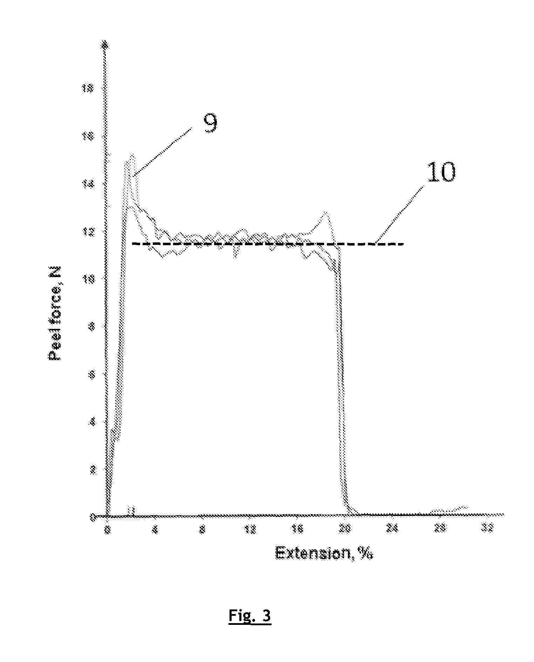

In the present invention, the peelability is obtained by first breaking the rupturable layer (peak strength observed in Fig.3), then propagating the rupture at the interface between the adhesive layer 2 and the rupturable layer 1, the propagation corresponding to the average peel strength 10 observed in Fig. 3 and the propagation leaving a delaminated seam 7 on the tray 8. A second breaking of the rupturable layer is then needed to separate the lidding from the tray (secondary break).

Preferably, the adhesion between the polyester sealant layer 1 and the adhesive layer 2, as measured at 180°in a peel test with a cross-head speed of about 300mm/min, is lower than 15N/15mm, preferably comprised between 13 and 6N/15mm. The adhesive strength is to be understood as the average peel strength 10 observed on a seal after breaking the sealant layer, such breaking appearing on the peel test diagram as a high peak 9 at the beginning of the peel process (see Fig. 3).

For an efficient and smooth peeling of a packaging, the ratio of the breaking peel strength 9 and the average peel strength 10 has to be in a certain range of about 2 and 1 and preferably between 1.6 and 1.1. Particularly preferred are ratio values between 1.4 and 1.2.

The peelability is obtained by delamination at the interface between the adhesive layer and the sealant layer. This latter should be as thin as possible. Therefore, the sealant layer has a thickness preferably lower than 15µm, advantageously lower than 10µm, more preferably lower than 5µm.

Advantageously, the thickness of the sealant layer is selected so that its breaking before peeling does not induce a peak peel strength of more than 18N/15mm, preferably not more than 16 N/15mm (see Fig.4).

Usual barrier layers are very thin EVOH layers of less than 5µm. Therefore, such barrier layers are preferably supported by an additional support layer. This support layer may be for example a polyolefin layer based on polyethylene or polypropylene.

An additional bonding layer 4 may be coextruded along with the other layers, for example in order to ease a subsequent lamination process. If needed, an additional tie layer (not represented) may be needed between the barrier layer 3 and the bonding layer 4.

The coextruded peelable structure may be laminated onto an additional layer 6 such as a polyester layer, preferably on a PET-based layer. This lamination is performed using a usual adhesive layer 5.

As the coextruded structure is very thin, it is preferably produced using the process described in WO 2009/130070 which is incorporated herein by reference. This document specifically discloses the extrusion of a symmetric structure supported by a central polyolefin liner. This liner supports the peelable film of the present invention on each side; the whole structure is later laminated on a substrate and then finally separated from this liner.

The film of the invention may be either used as a lidding film for closing a monolayer polyester-based tray or on other polyester-based surfaces or sealed on itself in various flow pack applications.
In the following examples the polymer types are only illustrative examples and can of course be replaced by equivalents available in the market or by polymers with similar features.

### Examples

### Example 1

A coextruded symmetric structure on each side of a polyethylene liner was first produced with the following layers:
- 10µm LLDPE Escorene LL 1001 KI (ExxonMobil)
- 3µm tie layer-anhydride grafted ethylene copolymer, Admer AT1955E. (Mitsui Chemicals)
- 3µm EVOH (EVAL F171 B) (Eval Europe)
- 3µm tie layer (Admer AT1955E)
- 3µm PETG (Eastar 6763)(Eastman)
- **18µm PE liner (Escorene LD 150 BW)**
- 3µm PETG (Eastar 6763)(Eastman)
- 3µm tie layer (Admer AT1955E)
- 3µm EVOH (EVAL F171 B)
- 3µm tie layer-anhydride grafted ethylene copolymer, Admer AT1955E. (Mitsui Chemicals)
- 10µm Escorene LL 1001 KI (ExxonMobil)
An additional 23µm-thick PET layer was then laminated on both sides of the obtained coextruded structure. Then, as described in WO 2009/130070, two films having the final structure PET//PE/tie layer/EVOH/tie layer/PETG were separated from the PE liner.

### Example 2

Example 2 is identical to Example 1 except that the PETG layer was 5µm thick.

### Example 3

Example 3 is identical to Example 1 except that the PETG layer thickness was 7µm.

### Example 4

Example 4 is identical to Example 1 except that Admer AT1955E was replaced by Bynel 22E780.

### Example 5

In example 5, EVOH was replaced by Polyamide Akulon F132E and the PETG layer thickness was 5µm.

### Example 6

In Example 6, the EVOH layer was replaced by 15µm polyamide B/UBE 5033B and the PETG layer thickness was 7µm.

### Example 7

In example 7, no subsequent lamination was performed and the coextruded structure was:
- 18pm Polyamide Akulon F132E
- 3µm EVOH (EVAL F171 B) (Eval Europe)
- 3µm tie layer (Admer AT1955E)
- 3µm PETG (Eastar 6763)(Eastman)
- 18pm PE liner (Escorene LD 150 BW)
- 3µm PETG (Eastar 6763)(Eastman)
- 3µm tie layer (Admer AT1955E)
- 3µm EVOH (EVAL F171 B)
- 18pm Polyamide Akulon F132E
The obtained coextruded structure was then separated from the liner and directly sealed to APET trays.

The oxygen transmission rate was measured on all films at 23°C, 50% R.H. The results are reported in cc/m2.atm.day, in Table 1.

The PETG layer of the films of the examples was then thermally sealed on an APET tray (base web) produced on a Multivac packaging machine (packs of 6x13 cm, 1.5 cm deep) and the multilayer lidding film was sealed on the base web using the following conditions:

### Test setting conditions (Range of settings recommended for Multivac forming line)

Sealing Pressure*: 0.3-0.5 MPa
Sealing Temperature*: 140-180°C.
Sealing time*: 1.1-1.6 seconds.
Seal area width: Minimum 4mm.
*(Optimized setting depends of General condition / Age / Reference of Multivac forming line)

The obtained seal was then peel-tested according to the following set-up.
Peel test with Tensile tester: Hounsfield model H5KS.
Load cell: of 100N.
Grips: moving upper and static lower grips of 2.5cm wide
Rate of grip separation: 300 mm/min
Peel test angle: about 180°
Sample width: 15mm
Room temperature (20 to 25°C)

- A: First break strength in N/15mm (see ref. 9 in Fig. 3)
- B: Peel strength in N/15mm (average value, see ref. 10 in Fig.3)

The results are summarised in Table 1.

| Example | Oxygen Transmission cc/m².atm. day (*) | A | B |
|---|---|---|---|
| 1 | 1 | 15 | 11.5 |
| 2 | 0.2 | 15.2 | 12 |
| 3 | 1 | 15 | 13 |
| 4 | 3 | 15.7 | 12 |
| 5 | 400 | 15.6 | 12 |
| 6 | 75 | 15 | 12.5 |
| 7 | 0.8 | 15.4 | 11.3 |

| | | | |
|---|---|---|---|
| (*) O₂ barrier measured at 23°C and 50% lower than 1000 cc/m2.atm.day, measured according to DIN 53380. | | | |

The peelable film of the present invention is preferably used as a lidding, but it can also be sealed on itself for flow pack applications.

## Claims

1. A peelable film to be sealed on a polyester-based substrate comprising a coextruded multilayer structure comprising:
- a rupturable polyester-based sealant layer (1);
- an adhesive layer (2) in contact with said rupturable layer, comprising a polymer selected from the group consisting of ionomers, maleic anhydride grafted polyolefin, EVA, EBA, EMA and EAA;
- a gas-barrier layer (3) in contact with said adhesive layer (2), comprising a gas-barrier polymer selected from the group consisting of EVOH and polyamide,
**characterised in that** the average peel strength (10) between the adhesive layer (2) and the rupturable sealant layer(1) is lower than 15N/15 mm, preferably lower than 13N/15mm as measured in a 180° peel geometry.

2. Peelable film according to Claim 1, wherein the first break strength (9) between the adhesive layer (2) and the rupturable sealant layer(1) is lower than 18N/15 mm, preferably lower than 16N/15mm as measured in a 180° peel geometry.

3. Peelable film according to Claim 1 or 2, wherein the ratio between the first break strength (9) and the average peel strength (10) is between 1.6 and 1.1.

4. Peelable film according to any of the preceding Claims, wherein the thickness of the polyester-based sealant layer (1) is lower than 10µm and preferably lower than 5µm.

5. Peelable film according to any of the preceding Claims, wherein the polyester-based sealant layer (1) comprises a polyester selected from the group consisting of PET, PETG and APET.

6. Peelable film according to any of the preceding Claims, wherein the adhesive layer (2) is a maleic anhydride grafted polyolefin.

7. Peelable film according to any of the preceding Claims, wherein the barrier layer (3) comprises EVOH.

8. Peelable film according to any of the preceding Claims, wherein the barrier layer (3) has an oxygen transmission measured at 23°C and 50 % lower than 1000 cc/m2.atm.day, preferably lower than 500 cc/m2.atm.day measured according to DIN 53380.

9. Peelable film according to any of the preceding Claims, wherein the adhesive layer (2) comprises a polymer selected from the group consisting of EVA, EBA, EMA and EAA.

10. Peelable film according to any of the preceding Claims further comprising a tie layer (4) adjacent to the barrier layer.

11. A laminate comprising the peelable film according to any of the preceding Claims.

12. A packaging comprising a peelable film or a laminate according to any of the preceding Claims.

13. Process for the preparation of the peelable film according to any of the preceding Claims comprising the steps of:
- extruding a polyolefin liner with the peelable film on each side in a symmetric configuration;
- separating the peelable film from the polyolefin liner.

14. Process according to claim 13 comprising additionally a lamination step of the peelable film to a substrate.
